# EUROPEAN PATENT APPLICATION

(11) **EP 2 400 736 A1**
(43) Date of publication of application: **28.12.2011**
(21) Application number: 11170410.2
(22) Date of filing: 17.06.2011
(51) Int. Cl.: H04N 1/00, G01C 21/00

(54) **Method And Apparatus For Displaying Image Including Position Information**

(30) Priority: 23.06.2010 KR 20100059418
(71) Applicant: Samsung Electronics Co., Ltd., Suwon-si, Gyeonggi-do 442-742 (KR)
(72) Inventor: Kim, Dae-hyun, Gyeonggi-do (KR); Lee, Chang-soo, Seoul (KR); Lee, Sang-hee, Seoul (KR); Phang, Joon-ho, Seoul (KR); Yoon, Yeo-ri, Gyeonggi-do (KR)
(74) Representative: Fearnside, Andrew Simon

(57) **Abstract**

A method and an apparatus are provided, which can display a map that includes a position corresponding to position information in the form of a bird's eye view having perspective views and display an image on an upper portion of the map that is displayed in the form of a bird's eye view to correspond to the position information when the image including the position information is displayed on the map.

## Description

### PRIORITY

This application claims priority from Korean Patent Application No. 10-2010-0059418, filed on June 23, 2010, in the Korean Intellectual Property Office, the disclosure of which is incorporated herein by reference.

### BACKGROUND

### 1. Field

Methods and apparatuses consistent with the exemplary embodiments relate to displaying at least one image including position information and an apparatus adopting the method.

### 2. Description of the Related Art

With the development and spread of digital cameras, camcorders, and imaging devices, users can easily capture and process images. Also, networks and sensor networks have been developed, and storage capacity has increased and miniaturization of storages have also been improved.

For example, as a service through a network, there is a map information providing service. The map information providing service is a service in which a user terminal, such as a computer, an e-book, a portable terminal, an Internet Protocol Television (IPTV), or an e-frame, which is connected to a network, transmits a map display request of a specified area to a map information providing server, and the map information providing server acquires the requested map of the area and transmits the acquired map to the user terminal.

The user may capture an image using a digital camera, and record the image in a storage medium.

In the case where a Global Positioning System (GPS) is built into a digital camera, the digital camera can automatically measure an image capturing position from an artificial satellite and receive position information data.

The image is planarly displayed on the map that is acquired through the map information providing service using the position information data received from the artificial satellite.

As the expectations of the above-described image display increase, a user desires that stereoscopy is added to the image so that the image can be stereoscopically displayed.

### SUMMARY

The exemplary embodiments has been made to address at least the above problems and/or disadvantages and to provide at least the advantages described below. According to the present invention there is provided an apparatus and method as set forth in the appended claims. Other features of the invention will be apparent from the dependent claims, and the description which follows.

Accordingly, an aspect of the exemplary embodiments provides a method and an apparatus, which can display a map that includes a position corresponding to position information in the form of a bird's eye view having perspective views and display an image on an upper portion of the map that is displayed in the form of a bird's eye view to correspond to the position information when the image including the position information is displayed on the map.

According to an aspect of the exemplary embodiments, a method of displaying an image includes displaying at least one image including position information; and displaying a map including a position that corresponds to the position information in the form of a bird's eye view having perspective views; wherein the image is displayed on an upper portion of the position of the map displayed in the form of a bird's eye view.

The position information may include at least one of position information on a position in which the image is captured, position information on a position in which the image is downloaded, and position information on a position designated by a user.

The method of displaying an image according to an exemplary embodiment may further include displaying the map so that the map is changed to correspond to position information of another image when another image is selected.

The method of displaying an image according to an exemplary embodiment may further include converting and displaying the image with a size that is smaller than the size of another image when another image is selected; and converting and displaying still another image with a size that is smaller than the size of another image.

The image may move in the same direction as that in which another image moves.

In the case where two or more images are displayed, the images are displayed in positions on the map that correspond to the positions in which the images are formed.

A method of displaying the images according to the positions in which the images are formed may display an image formed in a position that is relatively near with a relatively large size, and display an image formed in a position that is relatively far away with a relatively small size.

The method of displaying an image according to an exemplary embodiment may further include displaying marks indicating a position movement path or direction of the images on the map in the case where two or more images are successively displayed.

The image may include at least one of a two-dimensional (2D) photograph, a three-dimensional (3D) photograph, a 2D moving image, and a 3D moving image.

The position information may include at least one of meta data and geo tag.

The position information may indicate a geographical position using a Global Positioning System (GPS).

The method of displaying an image according to an exemplary embodiment may further include downloading the map including a geographical position through the Internet.

The map may be displayed in the same direction as a direction in which the image has been captured.

The method of displaying an image according to an exemplary embodiment may further include further displaying a direction indicator that indicates a capturing direction of the image or a direction of the map.

In the case where the direction indicator is displayed with a changed capturing direction of the image or a changed direction of the map, the direction indicator may indicate the changed direction in order to indicate the change in direction of the image or the change in direction of the map.

In the case where two or more images are displayed, the map may be displayed with its direction changed in accordance with an order determined by the time that the images were formed.

In the case where two or more images are displayed, the images may be displayed in groups in accordance with the time order of forming the images.

In the case where two or more images are displayed, the images which are formed in the same position may be displayed in a group.

The same position may include at least one of a radius equal to or shorter than 300m, a latitude equal to or smaller than 0.0001 degree, and a longitude equal to or shorter than 0.0001 degree based on a GPS position measurement unit.

In the case where two or more images are formed and successively displayed, the position of the map may be successively changed in accordance with position information of the images.

In the case where two or more images are displayed, the images may be displayed in accordance with an order determined by the time that the images were formed.

In the case where the images are successively displayed, direction indicators may also be successively displayed corresponding to the position information of the image.

In the case where the image is formed as a moving image, the position of the map may be successively changed in accordance with position information of the images.

In the case where the image is formed as a moving image, marks that indicate a position movement path or direction of the moving image may be successively displayed on the map in accordance with position information of the moving image.

The image may be displayed in a direction different from a direction in which the map is displayed.

Direction indicators may be further displayed corresponding to the position information of the image.

According to another aspect of the exemplary embodiments, a method of displaying an image includes displaying at least one image; displaying a map including position information in the form of a bird's eye view having perspective views; displaying the image in an upper portion of a specified position of the map that is displayed in the form of a bird's eye view; and determining the specified position of the map as the position information of the image.

In the case where two or more images are displayed, the images may move in accordance with the position information.

According to still another aspect of the exemplary embodiments, an apparatus for displaying an image includes a display unit displaying at least one image including position information and a map including a place that corresponds to the position information; and a control unit controlling the display unit to display the map in the form of a bird's eye view having perspective views and to display the image in an upper portion of the map that corresponds to the position information of the map displayed in the form of a bird's eye view.

The apparatus for displaying an image according to an exemplary embodiment may further include a control unit controlling the display so that the map moves to a position of another image in accordance with position interlocking when another image is displayed.

The position information may include at least one of position information regarding a position in which the image is captured, position information regarding a position in which the image is downloaded, and position information regarding a position designated by a user.

In the case where two or more images are displayed, the images may be displayed in positions on the map that correspond to the positions in which the images are formed.

The images may be displayed in accordance with the positions in which the images are formed so that the images formed in a relatively near position are displayed with a relatively large size, and the images formed in a relatively far position are displayed with a relatively small size.

In the case where two or more images are displayed, the images may be displayed corresponding to the position information on the map in accordance with an order determined by the time that the images were formed.

According to another aspect of the exemplary embodiments, there is provided a computer-readable recording medium having embodied thereon a program that performs a method of displaying an image including position information in an upper portion of a map that is displayed in the form of a bird's eye view having perspective views.

According to the exemplary embodiments, in the case of displaying an image including position information on a map, the map that includes a position corresponding to the position information is displayed in the form of a bird's eye view having perspective views, and the image is displayed corresponding to the position information in an upper position of the map displayed in the form of a bird's eye view.

### BRIEF DESCRIPTION OF THE DRAWINGS

The above and other aspects will be more apparent from the following detailed description when taken in conjunction with the accompanying drawings, in which:
FIG. 1 is a block diagram illustrating the configuration of a display apparatus displaying an image including position information and a map in the form of a bird's eye view having perspective views according to an exemplary embodiment;
FIG. 2 is a diagram illustrating an example in which an image including position information is displayed on a map displayed in the form of a bird's eye view having perspective views;
FIGS. 3A and 3B are diagrams illustrating an example in which a map is changed and displayed corresponding to position information of another image when another image is selected;
FIGS. 4A and 4B are diagrams illustrating an example in which an image is converted and displayed with a size that is smaller than the size of another image and a still another image is converted and displayed with a size that is smaller than the size of another image when another image is selected.
FIG. 5 is a diagram illustrating an example in which marks indicating a position movement path or direction of the images are displayed on a map in the case where two or more images are successively displayed;
FIGS. 6A and 6B are diagrams illustrating an example in which a map is displayed in the same direction as the direction in which an image is captured;
FIGS. 7A and 7B are diagrams illustrating an example in which the direction of a map is changed and displayed in accordance with an order determined by the time that the images were formed in the case where two or more images are displayed;
FIG. 8 is a diagram illustrating an example in which images are displayed in groups in accordance with an order determined by the time that the images were formed in the case where two or more images are displayed;
FIG. 9 is a diagram illustrating an example in which images formed in the same position are displayed in a group in the case where two or more images are displayed; and
FIG. 10 is a diagram illustrating an example in which the display direction of an image is different from the display direction of a map.

### DETAILED DESCRIPTION OF THE EXEMPLARY EMBODIMENTS

Hereinafter, exemplary embodiments are described in detail with reference to the accompanying drawings.

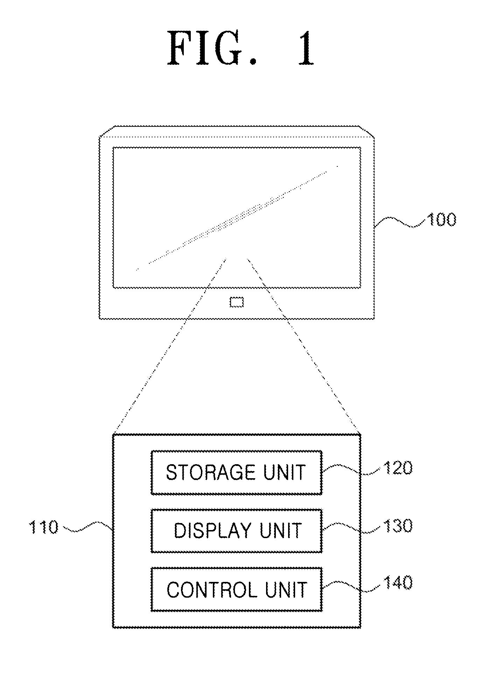

FIG. 1 is a block diagram illustrating the configuration of a display apparatus displaying an image including position information and a map in the form of a bird's eye view having perspective views according to an exemplary embodiment.

Referring to FIG. 1, an image display module 110 of a display apparatus 100 that displays an image and a map according to an exemplary embodiment includes a storage unit 120, a display unit 130, and a control unit 140.

The display apparatus 100 may further include an external connection unit (not shown), an Internet control unit (not shown), and a speaker connection unit (not shown).

The external connection unit may be connected to the Internet, a Universal Serial Bus (USB), or a storage medium.

For example, the Internet control unit may download a map that is provided as a service in "Google" or the like through the Internet.

The display apparatus 100 displays an image. Here, the display apparatus 100 may include at least one of a general broadcasting TV, a cable TV, an Internet TV, a 3D TV, an e-book, a portable terminal, an IPTV, and an e-frame.

The image display module 110 includes the storage unit 120, the display unit 130, and the control unit 140.

The storage unit 120 may store map information data that is acquired through the external connection unit or the Internet.

The display unit 130 may display the image and the map.

The control unit 140 controls the display unit 130 to display at least one image including the position information. Also, the control unit 140 controls the display unit 130 to display the map including a position that corresponds to the position information in the form of a bird's eye view having perspective views.

Also, the control unit 140 controls the display unit 130 to display the image in an upper portion of the position that corresponds to the position information of the map that is displayed in the form of a bird's eye view.

A method of recording the position information on the image using the image apparatus will be described.

For example, a digital camera converts an image picked up by an image pickup device such as a CCD sensor into digital format data, and records the digital data in a recording medium, for example, a memory card, a flash card, a hard disk, or the like.

The image is stored in the recording medium in a prescribed format.

In an Exchangeable Image File Format (EXIF) type in JPEG or digital video (DV) data format among the above-described image formats, a field in which position information of the position in which the image has been captured is defined.

The position information regarding which the image is captured by the digital camera connected to the GPS is recorded in the field.

The position data may be at least one of meta data and geo tag.

A camera having a GPS function may automatically measure the capturing position and record it as attribute information of the captured data.

Also, in the case where a mobile communication terminal has a built-in Global Positioning System (GPS), the mobile communication terminal can store longitude and latitude information regarding the current position using the GPS.

In the case where the mobile communication terminal does not have a built-in GPS, the mobile communication terminal can calculate and store the position of the mobile communication terminal based on a delay time of a signal transfer from a base station.

The GPS is a navigation system that determines an accurate position and time of an object that is stationary or moves on or around the earth using a radio signal received from an artificial satellite that is developed and operated by the U.S. Department of Defense, and its formal name is Navigation System with Timing And Ranging/Global Positioning System (NAVSTAR/GPS).

Errors in longitude and latitude of the GPS are in the range of 10 to 15m, and the resolution is 3cm per second.

A process of obtaining position information through the artificial satellite is as follows.

In the case of capturing an image using an image apparatus, the position information sent from the artificial satellite is received through an antenna of the image apparatus. A GPS processor integrated circuit (IC) built in the image apparatus calculates the position of the image from the position information.

The calculated position information data is transmitted to a DSP (Digital Signal Processor) using UART (RS232C) communication.

The position information of the image that has passed through the digital signal processor is stored in the storage unit in a JPEG (EXIF) form.

As one service through a network, there is a map information providing service.

The map information providing service is for a map information providing server which provides map information through a user terminal, such as a TV, a computer, a portable terminal, an e-book, or an e-frame, which are connected to the network.

For example, the user terminal transmits a request for a map display of a specified area to a map information providing server, and the map information providing server, which has received the request, acquires the requested map of the area, and transmits the acquired map to the user terminal.

Also, the map information providing server can provide a satellite picture in addition to the map.

By using the map information providing service including the position information, an image that a user possesses, for example, an image including the position information, which was captured in user's destination, can be displayed together with the position on the map that is provided by the map providing server.

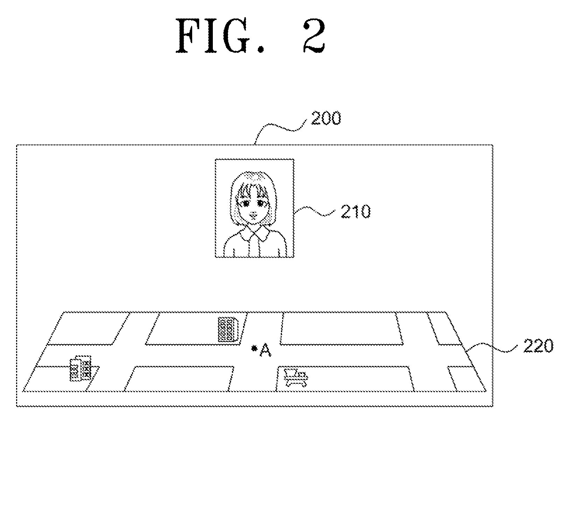

FIG. 2 is a diagram illustrating an example in which an image 210 including position information, for example, position "A", is displayed on a map 220 displayed in the form of a bird's eye view having perspective views.

Referring to FIG. 2, the image 210 and the map 220 are displayed on a display 200. A point "A" on the map 220 indicates the position in which the image 210 was captured.

The image 210 is acquired through the image apparatus and includes the position information from the artificial satellite. The map 220 is a map that includes a position "A" of the image 210 through the Internet or data already stored.

The map 220 may be at least one of a two-dimensional (2D) map, a three-dimensional (3D) map, and a satellite map.

The image 210 may include at least one of a 2D picture, a 3D picture, a 2D moving image, and a 3D moving image.

In order to display the perspective views according to a distance, the map 220 is displayed in the form of a bird's eye view in order to give the effect that the map 220 was seen from an upper position.

According to the bird's eye view, the map 220 is inclined so that buildings that are at closer distances are shown in large size and buildings that are at far distances are shown in small size. Also, the image 210 is displayed in an upper portion of the map 220, which indicates the same position as the position information of the image 210, and thus the map 220 and the image 210 are displayed on the display 200 in a perspective view or in a 3D view.

That is, the display apparatus 100 as illustrated in FIG. 1 can display at least one image 210 including the position information and a map 220 including a position that corresponds to the position information in the form of a bird's eye view having perspective views. In this case, the image 210 is displayed on an upper portion of the position of the map 220 that is displayed in the form of a bird's eye view.

For example, an image 210 that is stored in the storage unit 120 can be read and displayed on the display 200.

The map 220 including the position information can be displayed on the display 200 in the form of a bird's eye view having perspective views.

The image 210 can be displayed on an upper portion of a specified position of the map 220 that is displayed in the form of a bird's eye view.

The specified position of the map may be determined as the position information of the image.

The position, in which the image 210 is displayed, on an upper portion of the map 220 may be determined and indicated as the position information of the image.

Also, in the case where two or more images 210 are displayed, the images may move in accordance with the position information.

According to the method as illustrated in FIG. 2, the perspective effect can be obtained using not only a 3D map but also a 2D map.

A method of recording the position information on a captured image is as follows.

The position information of the image 210 that is captured through the GPS and the artificial satellite can be obtained. If the user downloads the image 210, the user can obtain the position information of the downloaded image.

The user can obtain the position information by directly designating the position information in meta data of the image 210.

Through the Internet, the map 220 including the position information can be downloaded.

In order to display the image 210 having the position information on the upper portion of the map 220, it is required to generate a display structure technology and an HTML file.

The display structure technology is to display data based on an HTML file that is generated by the user or a service providing server that provides the generation service.

For example, in displaying the image 210 on the map 220, an Asynchronous Java Script + XML (AJAX) technology is used. The AJAX technology is an interactive web application technology that enables processes such as update of display data and the like through transmission/reception of XML data with a server, without performing loading of a web page, using the HTTP communication function of Java Script that exists in a web browser, and is mainly applied to a network service that operates on an Internet browser.

By applying the AJAX technology, it is possible to display the image 210 in combination with the map 220 provided by the map information providing server.

The map information providing server issues an Application Program Interface (API) key to the service providing server that gives an authority of preparing an HTML file or an XML file, writes the key information in the HTML file or the XML file generated by the service providing server, and permits the use of the API of the map information providing server only in the case where the key information is confirmed.

Accordingly, by making the position that corresponds to the position information (longitude and latitude) that is set as the attribute information of an image or the like, which is captured by a user, correspond to the map information acquired from the map information providing server, the capturing position of the image can be shown on the map.

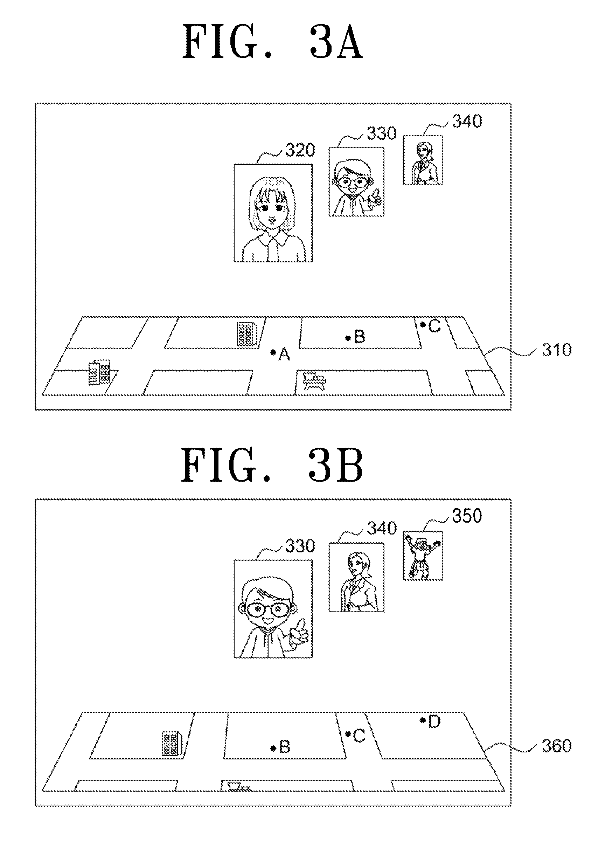

FIGS. 3A and 3B are diagrams illustrating an example in which a map 360 is changed and displayed corresponding to a change in position information of an image 330 when image 330 is selected.

In FIG. 3A, a first image 320, a second image 330, and a third image 340 are displayed in an upper portion of the map 310.

In a display state as illustrated in FIG. 3A, if a user selects second image 330, second image 330 moves to the foremost as illustrated in FIG. 3B. At this time, the map 360 also moves so that the position B corresponding to second image 330 is positioned in the center on the map 360. The user's selection can be made by touch or using a cursor.

If the user selects the image 320 in a display state as illustrated in FIG. 3A, the image 320 is shown on the upper portion of the map 310 in a foremost position.

The points A, B, or C on the map 310 in FIG. 3A respectively correspond to the position of the first image 310, the position of the second image 330, and the position of the third image 340.

If the image 320 is selected, the image 320 is displayed in a preview form in the position of the captured map 310 with the largest size. Second image 330 is located behind the image 320, and is displayed in a preview form with a size smaller that the size of the image 320. Third image 340 is located behind second image 330, and is displayed in a preview form with a size smaller than the size of second image 330.

In the case where plural images are displayed, the selected image is positioned in a foremost position of the map, and the non-selected images 330 and 340 are positioned behind the selected image 320. Among the non-selected images 330 and 340, the image 330 that is nearest to the position of the selected image 320 is positioned behind the selected image 320, and the image that is farthest from the position of the image 320 is positioned behind the second image 330 with a size that is smaller than the size of the second image 330.

According to the method of displaying the images according to the positions in which the images are formed, respectively, the image formed in a relatively near position is displayed with a relatively large size, and the image formed in a relatively far position is displayed with a relatively small size.

Also, according to the method of displaying the images according to the time in which the images are formed, an image that was formed at a relatively early time is displayed with a relatively large size, and an image that was formed more recently is displayed with a relatively small size.

According to the map 310 of FIG. 3A, the position A of the image 320 is in the center. The position B of second image 330 on the map 310 is behind the position A of the image 320, and the position C of third image 340 is behind the position B of second image 330.

In this case, the positions of the images 320, 330, and 340 and the positions A, B, and C on the map 310 correspond to each other.

As illustrated in FIG. 3A, by displaying the map 310 with a perspective view, the image 320 in the nearest position with the largest size, and the image 340 in the farthest position with the smallest size, a user can view a 3D image through the display.

The control unit 140 can control the display unit 130 to display the image and the map with perspective views.

If second image 330 is selected in a display state of FIG. 3A, the selected second image 330 moves to the foremost position and is displayed as illustrated in FIG. 3B.

FIG. 3B shows that second image 330, third image 340, and a fourth image 350 are displayed on the upper portion of the map 360.

The points B, C, and D on the map 360 are displayed to correspond to the position of second image 330, the position of third image 340, and the position of fourth image 350, respectively.

If second image 330 is selected in the display state of FIG. 3A, second image 330 moves to the foremost position and the image 320 is removed from the display.

Also, by the movement of the map 360 as illustrated in FIG. 3B, the point that indicates the position of the image 320 is also removed from the display as illustrated in FIG. 3B.

At the same time, the map 360 of FIG. 3B also moves to correspond to the position of second image 330.

If second image 330 is selected in the display state of FIG. 3A, second image 330 of FIG. 3B moves to the foremost, third image 340 of FIG. 3A is displayed as in FIG. 3B, and is positioned behind second image 330.

In the case of selecting second image 330, the image 320 of FIG. 3A is removed from the display, and a fourth image 350 is displayed in FIG. 3B.

At the same time, the map 360 also moves and is displayed so that the position B of second image 330 moves to in the center. Here, the term "center" means the center of the map 360 that is displayed on the display. That is, in an example of FIGS. 3A and 3B, the center of the map 310 and the center of the map 360 are in different positions.

Referring to FIG. 3B, in the same manner as in FIG. 3A, the selected image 330 is positioned in the foremost of the map, and the non-selected images 340 and 350 are positioned behind the selected image 330. In this case, the image 340 that is nearest to the selected image 330 is positioned behind the selected image 330, and the image 350 that is farthest from the selected image is positioned behind the image 340 with a size that is smaller than the size of the image 340.

According to the map 360 of FIG. 3B, the position B of second image 330 is in the center. The position C of third image 340 on the map 360 is behind the position B of the image 330, and the position D of fourth image 350 is behind the position C of third image 340.

In this case, the positions of the images 330, 340, and 350 and the positions B, C, and D on the map correspond to each other, and as another image is selected, the position of the map is also changed so that the position of the selected image is shown.

The display order of the images may be automatically changed according to an order determined by the time that the images were captured.

In an example as illustrated in FIG. 3B, the position B on the map 360 indicates the position in which second image 330 is captured, the position C indicates the position in which third image 340 is captured, and in the same manner, the position D indicates the position in which fourth image 350 is captured.

In FIG. 3A or FIG. 3B, the images can move in accordance with the position information of the image.

The control unit 140 can control the display so that the map moves according to the selected image.

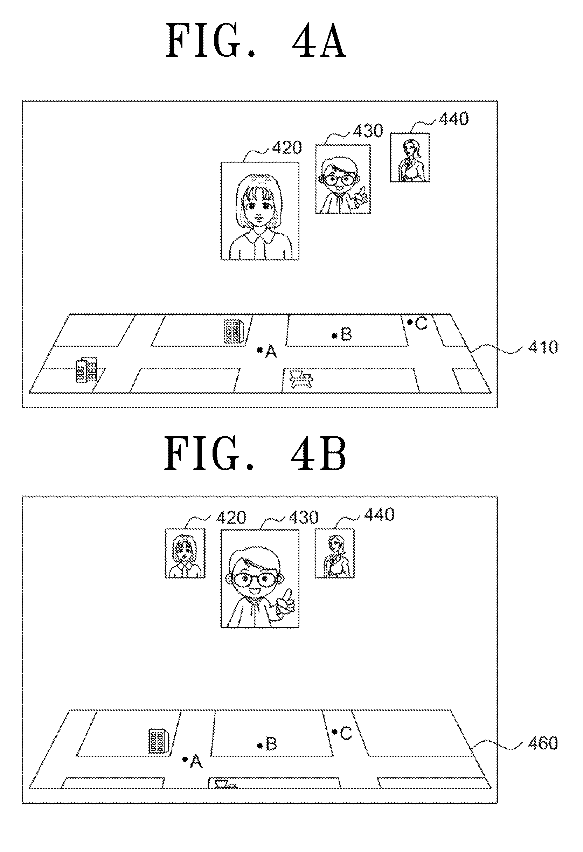

FIGS. 4A and 4B are diagrams illustrating an example in which an image is converted and displayed with a size that is smaller than a size of a second image and a third image is converted and displayed with a size that is smaller than a size of the second image when the second image is selected.

If a user selects second image 430 in a display state illustrated in FIG. 4A, second image 430 moves to a foremost position as illustrated in FIG. 4B. At this time, the map 460 also moves so that the position B of the second image 430 is in the center on the map 460.

FIG. 4A illustrates an image 420 displayed on the upper portion of the map 410 when an image 420 is selected.

FIG. 4A illustrates a first image 420, a second image 430, and a third image 440 which are displayed on an upper portion of the map 410.

In an example as illustrated in FIG. 4A, the position A on the map 410 indicates the position in which first image 420 is captured, the position B indicates the position in which second image 430 is captured, and the position C indicates the position in which third image 440 is captured.

FIG. 4B illustrates second image 430 displayed on an upper portion of the map 460 in the case where second image 430 is selected.

In FIG. 4B, first image 420, second image 430, and third image 440 are displayed on an upper portion of the map 460.

If second image 430 is selected in FIG. 4A, the size of first image 420 is reduced, and second image 430 moves to the foremost position of the display with its size enlarged.

The image is displayed in a preview form on the upper portion of the map.

The control unit 140 controls the display unit 130 to display not only the selected image but also non-selected images in the preview form.

If second image 430 is selected in FIG. 4A, the size of first image 420 in FIG. 4B becomes smaller than the size of second image 430, and the image 420 moves in the same direction as that of second image 430.

For example, if second image 430 moves in a direction in which the image moves to the foremost, that is, in a clockwise direction, in a position where second image 430 of FIG. 4B is displayed, image 420 also moves in the same clockwise direction.

If second image 430 moves to the foremost position, third image 440 is positioned behind second image 430 in a preview form.

Also, the size of third image 440 in FIG. 4B becomes larger than the size of third image 440 in FIG. 4A. That is, first image 420 second image 430, and third image 440 move in the clockwise direction. In this case, the size of second image 430 that exists in the center becomes largest.

FIG. 4A illustrates a case where first image 420 is selected, and in this case, the position A of an image 420 is in the center on the map 410. FIG. 4B illustrates a case where second image 430 is selected. In this case, the position B of second image 430 is in the center on the map 460, and the position of second image 430 moves to the foremost position of the map 460.

At this time, the positions of the images and the positions on the map correspond to each other.

In an example as illustrated in FIG. 4B, the position A on the map 460 indicates the position in which first image 420 is captured, the position B indicates the position in which second image 430 is captured, and the position C indicates the position in which third image 440 is captured.

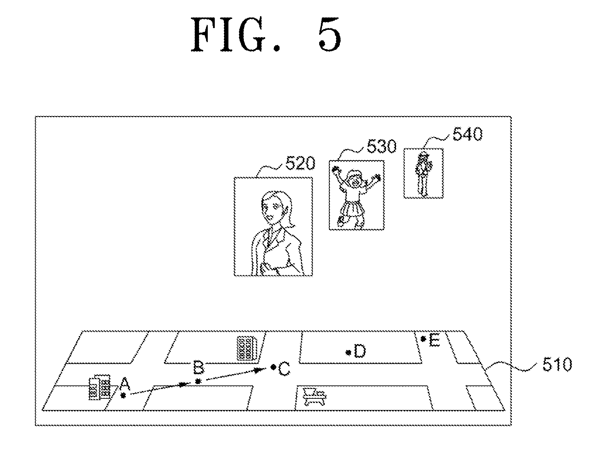

FIG. 5 is a diagram illustrating an exemplary embodiment in which marks indicating a position movement path or direction of the images are displayed on a map in the case where two or more images are successively displayed.

As described above with reference to FIG. 3B, FIG. 5 illustrates a case where an image previously displayed is removed from the display if another image 520 is selected by a user or by an engaged method.

In this case, in order to display a moving path of the images removed from the display on the map 510, arrow marks that connect the positions of the removed images may be displayed on the map. That is, the control unit 140 may control the display unit 130 to display the arrow marks that connect the positions of the removed images on the display.

If image 520 is selected, image 530 is positioned behind image 520, and the size of image 530 becomes smaller than the size of image 520.

Also, image 540 is positioned behind image 530, and the size of image 540 becomes smaller than the size of image 530. Although the removed images have disappeared from the display, position marks still exist on the map to indicate the moving path.

The position C of image 520 currently selected moves to the center on the map 510, and is displayed.

The images 520, 530, and 540 are displayed to correspond to the positions C, D, and E on the map 510 so as to indicate the position of capture of the images.

Although not illustrated in the drawing, as illustrated in FIG. 4B, the removed images may move to the left side of image 520 currently selected, that is, in the clockwise direction.

At this time, the size of the removed image may be smaller than image 520.

In an example as illustrated in FIG. 5, the positions A and B on the map 510 indicate the positions in which the removed images were captured, the position C indicates the position in which image 520 is captured, the position D indicates the position in which image 530 is captured, and in the same manner, the position E indicates the position in which image 540 is captured.

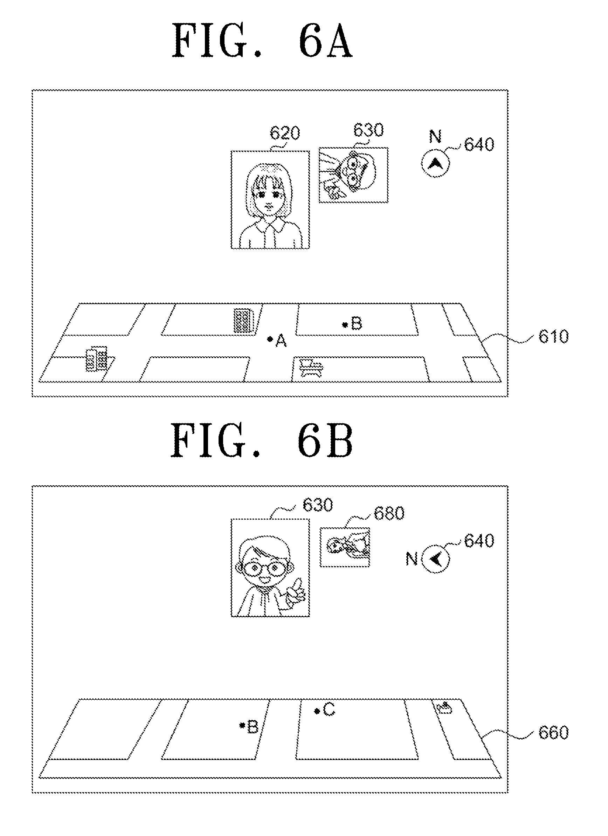

FIGS. 6A and 6B are diagrams illustrating an example in which a map is displayed in the same direction as the direction in which an image is captured.

The control unit 140 can control the direction of the view point to view the map to correspond to the capturing direction of the image so that the direction of the view point becomes identical to the capturing direction of the image.

Also, a direction indicator 640 that indicates the direction may be further displayed on the display to indicate the capturing direction of the image.

The control unit 140 can control the display unit 130 to display the direction indicator 640 on the display.

A method capable of recognizing the capturing direction of the image uses a geomagnetic sensor or an electronic compass that is connected to an image apparatus. For example, in the case where a camera is provided in the image apparatus, the image apparatus may set a direction that the camera views as the capturing direction, and stores an image that includes information on the capturing direction. The control unit 140 can set the direction of a view point that views the map according to the information on the capturing direction.

FIG. 6A illustrates a case where the capturing direction of a first image 620 is north and the capturing direction of a second image 630 is east.

The capturing direction of image 620 is north and thus the direction indicator 640 also indicates north.

In interlocking with the direction of the image 620, the map 610 is displayed in the same direction.

Second image 630 that indicates a direction that is different from the direction of the image 620 should be displayed on the map 610. Since the capturing direction of second image 630 is east, the display direction of second image 630 is rotated clockwise by 90° to be displayed in an interlocking manner with the direction of the direction indicator 640 displayed on the display.

In an example as illustrated in FIG. 6A, the position A on the map 610 indicates the capturing position of an image 620, and the position B indicates the capturing position of second image 630.

In the case where second image 630 in FIG. 6A is selected, second image 630 selected as in FIG. 6B is arranged to be at a foremost position on the display.

In a state where the map 610 is displayed according to the direction of the image 620 in FIG. 6A, second image 630 is rotated clockwise by 90° to be displayed, whereas in the case where second image 630 is selected as illustrated in FIG. 6B, second image 630 is rotated counterclockwise by 90° to be displayed in a normal direction.

In this case, the direction indicator 690 is also rotated counterclockwise by 90° in an interlocking manner with the direction of second image 630 in FIG. 6B.

The map 660 is also rotated counterclockwise by 90° in an interlocking manner with the direction of second image 630.

Through the direction indicator 640, the capturing direction of second image 630 can be recognized. If second image 630 is selected, the image 620 is removed from the display, and a new third image 680 is displayed.

In the same manner, if the capturing direction of third image 680 is different from the capturing direction of second image 630, the third image 680 that is displayed on the map 660 is rotated.

Although the images illustrated as an example in FIGS. 6A and 6B are image data that indicate north and east, the images can be displayed with the direction of the map changed regardless of the capturing directions of the images, and the capturing direction of the images can be known through the indicating direction of the direction indicator 690.

In an example as illustrated in FIG. 6B, the position B on the map 660 indicates the capturing position of second image 630, and the position C indicates the capturing position of third image 680.

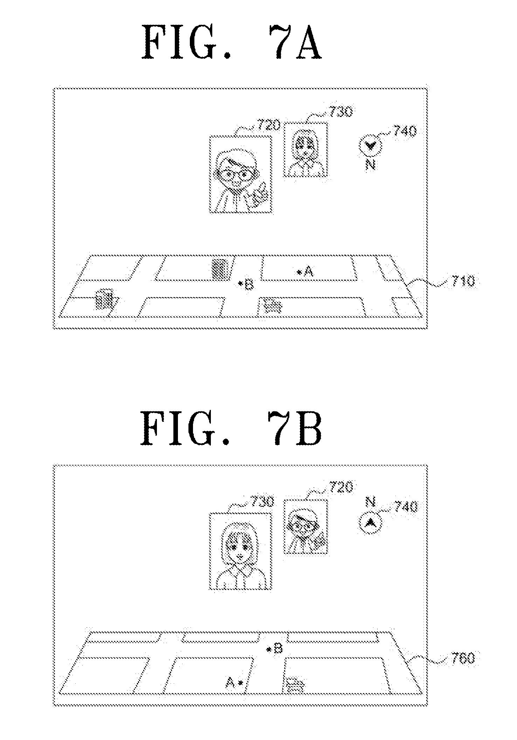

FIGS. 7A and 7B are diagrams illustrating an example in which the direction of a map is changed and displayed in accordance with an order determined by the time that the images were formed in the case where two or more images are displayed;

FIGS. 7A and 7B illustrate images displayed on the map using position information and time information which are simultaneously stored when the images are stored.

Referring to FIG. 7A, the capturing position B of an image 720 is positioned further northward than the capturing position A of another image 730.

When the images are displayed on the display apparatus, the images are displayed in the time order of capturing the images.

In the case where the direction of viewing the map 710 is north, although the capturing time of an image 720 is earlier than the capturing time of second image 730, the capturing position of an image 720 is further northward than the capturing position of second image 730, and thus an image 720 is positioned behind second image 730.

In consideration of the capturing time, the image 720 may be arranged to the foremost position and in interlocking with this, the map may be changed so that south is directed upward. Also, the direction indicator 740 may be changed so that north is directed downward in interlocking with the map 710.

That is, the control unit 140 can control the display type of the map and the images using the capturing time or position information.

In an example as illustrated in FIG. 7A, the position B on the map 710 indicates the position in which an image 720 is captured, and the position A indicates the position in which second image 730 is captured.

The control unit 140 can control the display unit 130 to display the image 720 that includes position information on the upper portion of the map 710 in interlocking with the position information.

Also, the control unit 140 can control the display unit 130 to display the direction indicator 740 and the display direction of the map according to the position information.

FIG. 7B illustrates a case where second image 730, which is positioned further northward than image 720, but is captured later than the image 720, is selected.

In the case where second image 730 is selected, image 720 is arranged behind second image 730, and the size of the image 720 becomes smaller than the size of second image 730.

The map 760 may also be changed so that north is directed upward in an interlocking manner with the direction of second image 730. In the same manner, the direction indicator 740 that indicates the north direction may be rotated by 180° so that north is directed upward.

Although the images illustrated as an example in FIGS. 7A and 7B are displayed to indicate north and south (positioned relatively in the front), the images can be displayed by changing the direction of the map regardless of the capturing direction of the images.

That is, in accordance with the time order of capturing, the earlier formed image is shown at an earlier time, and the later formed image is shown at a later time. In interlocking with this, the displayed map can be also changed in accordance with the direction of the image in the case where the map is an image that is captured from a farther place, but is captured earlier.

In an example as illustrated in FIG. 7B, the position A on the map 760 indicates the position in which second image 730 is captured, and the position B indicates the position in which image 720 is captured.

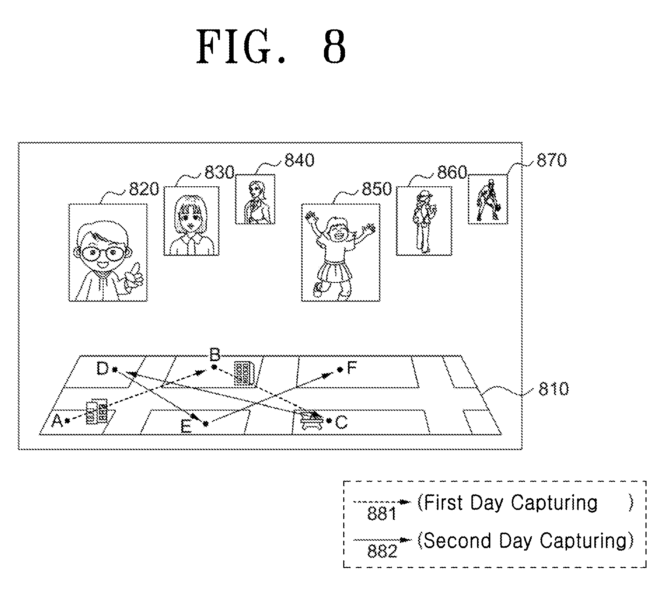

FIG. 8 is a diagram illustrating an example in which images are displayed in groups in accordance with an order determined by the time that the images were formed in the case where two or more images are displayed.

Referring to FIG. 8, in the case where the capturing time interval of the images is relatively large, the images are grouped in a time unit.

As an example, in the case where there exists images captured on a first day and images captured on a second day that is the next day, the images are arranged and grouped by capturing dates and are then displayed on the display.

The time unit may include at one of second, minute, time, day, month, and year.

The images 820, 830, and 840 captured on the first day are arranged and grouped in the order of their capturing to be displayed. Also, in order to indicate that the images 820, 830, and 840 are images captured on the first day, marks are displayed in the order of capturing time using a dotted arrow 881.

The images 850, 860, and 870 captured on the second day are arranged and grouped in the order of their capturing to be displayed. Also, in order to indicate that the images 850, 860, and 870 are images captured on the second day, marks are displayed in the order of capturing time using a solid arrow 882.

In the same manner as in FIG. 5, the images are classified according to the capturing time by dates in a manner that the dotted arrow 881 is indicated between the images captured on the first day and the solid arrow 882 is indicated between the images captured on the second day on the map 810.

Through the dotted arrow 881 and the solid arrow 882, not only the capturing dates are discriminated but also a moving path of capturing places can be known.

In an example as illustrated in FIG. 8, the positions A, B, and C on the map 810 indicates the positions of the images 820, 830, and 840 captured on the first day, and the dotted arrow 881 indicates the moving path of the images 820, 830, and 840 captured on the first day.

In an example as illustrated in FIG. 8, the positions D, E, and F on the map 810 indicates the positions of the images 850, 860, and 870 captured on the second day, and the sold arrow 882 indicates the moving path of the images 850, 860, and 870 captured on the second day.

That is, the control unit 140 can group the images in accordance with the image capturing time unit, and control the display type of the grouped images.

As an example, in the case where two images 820 are displayed, the images can be displayed in accordance with the image creating time order.

That is, plural images can be displayed in the capturing time order, that is, in the order from the first captured image to the last captured image.

By contrast, the images may be displayed in the reverse order of capturing, that is, in the order from the last captured image to the first captured image.

Also, the direction indicator (not illustrated) can be successively displayed to correspond to the position information of the image.

The control unit 140 can set the images displayed on the upper portion of the map 810 in accordance with the information on the capturing time.

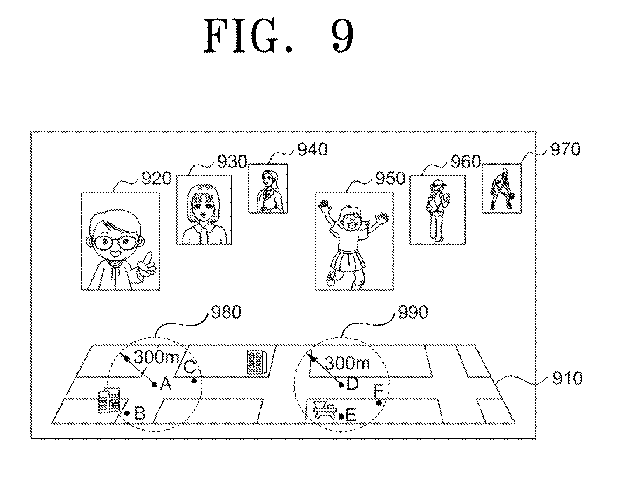

FIG. 9 is a diagram illustrating an example in which images formed in the same position are displayed in a group in the case where two or more images are displayed.

Referring to FIG. 9, images are classified in accordance with the places where the images are captured. That is, images captured in one area are classified into a group, and images captured in another area are classified into another group to be displayed.

As an example, images 930 and 940, which exist in an area 980 that is within a radius of 300m based on the position where an image 920 is captured, are formed into one group to be displayed.

Also, other images 960 and 970, which exist in an area 990 that is within a radius of 300m based on the position where another image 950 is captured, are formed into another group to be displayed.

The reference for selecting the position may be selected based on a certain image, based on a certain place, or based on a position where many images exist.

The display order of the grouped images may be arranged in accordance with the time order of capturing the images or capturing positions.

The reason why the areas 980 and 990 within a radius of 300m are selected as the reference is that the resolution of longitude and latitude is 0.0001 degree (about 300m) in consideration of a time error of an artificial satellite, a position error of the artificial satellite, a receiver noise, a reflection rate of a convection zone, and the like.

In an example as illustrated in FIG. 9, the position A on the map 910 indicates the position in which image 920 is captured, and the positions B and C indicate the positions in which images 930 and 940 are captured in the area 980 within the radius of 300m based on the position A.

Also, the position D on the map 910 indicates the position in which other image 950 is captured, and the positions E and F indicate the positions in which images 960 and 970 are captured in the area 990 within the radius of 300m based on the position D.

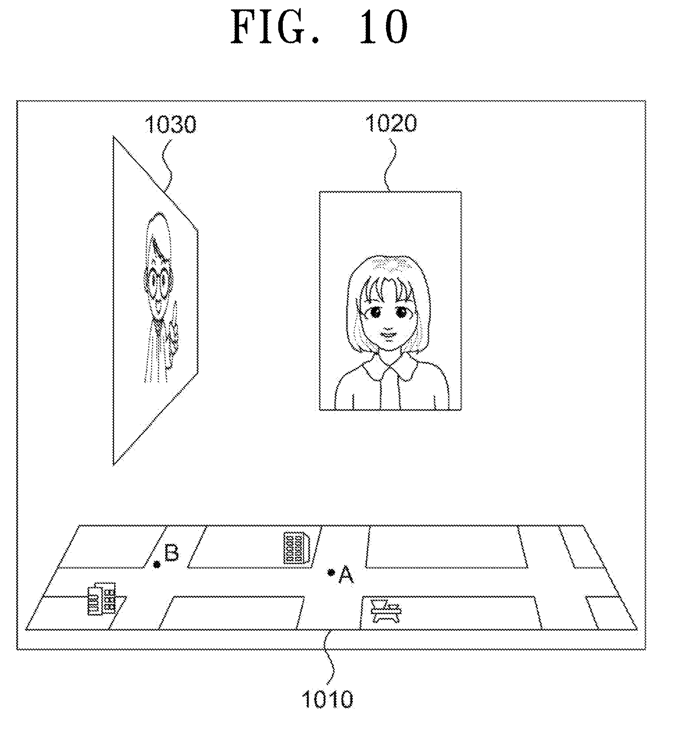

FIG. 10 is a diagram illustrating an example in which the display direction of an image is different from the display direction of a map.

In FIG. 10, the direction in which an image 1020 is displayed and the direction in which a map 1010 is displayed are the same, but another image 1030, of which the capturing direction is different from the capturing direction of the image 1020, is displayed in a vertical direction on the map.

As an example, an image 1020 is captured in a direction from south to north, and another image 1030 is captured in a direction from west to east.

In the case where an image 1020 is displayed on the upper portion of the map 1010, the map 1010 can be displayed in the same direction in an interlocking manner with the direction of the image 1020.

In the case where another image 1030 is displayed on the upper portion of the map 1010, the direction of the map 1010 interlocks with the direction of the image 1020, and thus another image 1030 may be displayed vertically to the direction in which the map is viewed.

The direction indicator (not illustrated) is further displayed to correspond to the position information of the images 1020 and 1030, and thus the capturing direction of the images can be recognized.

The position A on the map 1010 indicates the position in which an image 1020 is captured, and the position B indicates the position in which another image 1030 is captured.

The control unit 140 can set the directions of the images 1020 and 1030 that are displayed on the upper portion of the map in accordance with the information on the capturing direction.

On the other hand, although not illustrated in FIGS. 3 to 10, plural images may be formed and successively displayed.

In the case where the successive images are displayed on an upper portion of the map, the map also successively moves in an interlocking manner with the position information of the images.

Also, not illustrated in the drawing, the images may be displayed as a moving image.

In the case where the moving image is displayed on an upper portion of the map, the map also successively moves in an interlocking manner with the moving image. That is, in the case where a user captures a moving image as he/she is moving, the position information on the user's moving path is stored in the form of meta data in the moving image, and the center of the map may be successively changed to correspond to the position information stored in the moving image.

The control unit 140 can control the display unit 130 to display the image successively or as a moving image.

Also, the control unit 140 controls the display unit 130 to display the map that moves successively or together with the moving image.

The methods according to an exemplary embodiment may be implemented in the form of program commands that can be executed through diverse computer means and may be embodied in a computer readable medium. The computer readable medium may include program commands, data files, data structures, and the like, singly or in combination. The program commands embodied in the medium may be specially designed and configured for the exemplary embodiments or may be known to computer software providers to be usable.

While the inventive concept has been shown and described with reference to certain exemplary embodiments thereof, it will be understood by those skilled in the art that various changes in form and detail may be made therein without departing from the spirit and scope of the exemplary embodiments, as defined by the appended claims.

## Claims

1. A method of displaying an image, the method comprising:
displaying at least a first image including position information; and
displaying a map including a position that corresponds to the position information in a form of a bird's eye view having perspective views;
wherein the first image is displayed on an upper portion of the position of the map displayed in the form of the bird's eye view.

2. The method of displaying an image as claimed in claim 1, wherein the position information includes at least one of position information on a position in which the first image is captured, position information on a position in which the first image is downloaded, and position information on a position designated by a user.

3. The method of displaying an image as claimed in claim 1 or 2, further comprising displaying the map so that the map is changed to correspond to position information of a second image when the second image is selected.

4. The method of displaying an image as claimed in claim 3, further comprising:
converting and displaying the first image with a size that is smaller than a size of the second image when the second image is selected; and
converting and displaying a third image with a size that is smaller than the size of the second image.

5. The method of displaying an image as claimed in claim 4, wherein the first image moves in a same direction as a direction in which the second image moves.

6. The method of displaying an image as claimed in anyone of claims 1 to 5, wherein if two or more images are displayed, the two or more images are displayed in positions on the map that correspond to positions in which the two or more images are formed.

7. The method of displaying an image as claimed in claim 6, wherein a method of displaying the images according to the positions in which the images are formed displays images formed in a position that is relatively near with a relatively large size, and displays images formed in a position that is relatively far away with a relatively small size.

8. The method of displaying an image as claimed in anyone of claims 1 to 7, further comprising displaying marks indicating a position movement path of images on the map in a case where two or more images are successively displayed.

9. An apparatus for displaying an image, the apparatus comprising:
a display unit which displays at least one first image including position information and a map which includes a location that corresponds to the position information; and
a control unit which controls the display unit to display the map in the form of a bird's eye view having perspective views and to display the at least one first image in an upper portion of a position that corresponds to the position information of the map displayed in the form of a bird's eye view.

10. The apparatus for displaying an image as claimed in claim 9, further comprising a control unit which controls the display so that the map moves to a position of a second image in accordance with position interlocking when the second image is displayed.

11. The apparatus for displaying an image as claimed in claim 9 or 10, wherein the position information includes at least one of position information regarding a position in which the image is captured, position information regarding a position in which the image is downloaded, and position information regarding a position designated by a user.

12. The apparatus for displaying an image as claimed in anyone of claims 9 to 11, wherein if two or more images are displayed, the images are displayed in positions on the map that correspond to positions in which the images are formed.

13. The apparatus for displaying an image as claimed in claim 12, wherein the images are displayed in accordance with the positions in which the images are formed so that the images formed in a relatively near position are displayed with a relatively large size, and the images formed in a relatively far position are displayed with a relatively small size.

14. The apparatus for displaying an image as claimed in anyone of claim 9 to 13, wherein if two or more images are displayed, the images are displayed corresponding to the position information on the map in accordance with an order determined by the time that the images are formed.

15. A computer-readable recording medium recorded with a program that executes a method according to any one of claims 1 to 8.
